(19) Europäisches Patentamt
European Patent Office
Office européen des brevets

(11) **EP 4 534 490 A1**

(12) **EUROPEAN PATENT APPLICATION**

(43) Date of publication:
**09.04.2025 Bulletin 2025/15**

(21) Application number: **24204004.6**

(22) Date of filing: **01.10.2024**

(51) International Patent Classification (IPC):
*C02F 1/52* (2023.01)     *C02F 1/66* (2023.01)
*C02F 1/56* (2023.01)     *C02F 101/14* (2006.01)
*C02F 103/34* (2006.01)

(52) Cooperative Patent Classification (CPC):
**C02F 1/5236; C02F 1/66;** C02F 1/5245; C02F 1/56;
C02F 2101/14; C02F 2103/346

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.10.2023 TW 112138077**

(71) Applicant: **Mega Union Technology Inc.
330 Taoyuan City (TW)**

(72) Inventors:
• LIN, KUO-CHING
  Taoyuan City (TW)
• SHIU, SHR-HAN
  Taoyuan City (TW)
• LIN, HUNG-EN
  Taoyuan City (TW)
• CHEN, YI-QING
  Taoyuan City (TW)

(74) Representative: **Schwerbrock, Florian
Hagenauer Strasse 1
10435 Berlin (DE)**

(54) **TWO-STAGE SYSTEM AND METHOD FOR TREATING FLUORINE-CONTAINING WASTEWATER**

(57)     A two-stage system and method for treating fluoride-containing wastewater are provided. The system includes a first concentration defluoridation section and a second concentration defluoridation section. In the first concentration defluoridation section, the first mixed wastewater containing high concentration of fluoride ions is mixed with calcium chloride and stirred in the second mixing tank to obtain the second mixed wastewater containing low-concentration fluoride ions; in the second concentration defluoridation section, the second mixed wastewater is mixed with an advanced defluoridation agent and stirred in the third mixing tank to form a third mixed wastewater; the third mixed wastewater is introduced into a flocculation tank from the third mixing tank; and polymer is added for flocculation and sedimentation, so as to discharge a sediment and a defluoridation wastewater, the fluoride ion of which is less than 15ppm.

**Description**

BACKGROUND OF THE INVENTION

## 1. FIELD OF THE INVENTION

The present disclosure relates to the field of fluoride-containing wastewater treatment, and in particular to a two-stage system and a method for treating fluoride-containing wastewater using an advanced defluoridation agent.

## 2. DESCRIPTION OF THE PRIOR ART

Semiconductor industrial wastewater is industrial wastewater generated during the wafer production process. When producing wafers, semiconductor factories use a large amount of hydrofluoric acid to clean the wafer surface. In addition to hydrofluoric acid, other acids are also mixed with other substances, such as sulfuric acid, phosphoric acid, etc. In the manufacturing process of LCD panels and solar energy industries, high-concentration of hydrofluoric acid or mixed hydrofluoric acid is also used to clean TFT-LCD panels or solar silicon wafers. The pollutants contained in semiconductor industrial wastewater are mainly fluoride and the like.

Traditional methods for treating fluoride-containing wastewater are roughly divided into three types in industry: chemical precipitation, flocculation and precipitation, and adsorption. Among all, chemical precipitation is the most commonly used in industry and has great economic benefits. In General, the calcium salt precipitation method is used for high-concentration fluoride-containing industrial wastewater, i.e., calcium salts such as calcium chloride or calcium hydroxide are added to the industrial wastewater, so that the fluoride ions of the wastewater react with the calcium ions provided by the chemicals to form a calcium fluoride precipitation, thereby removing fluoride ions from the wastewater. Although the chemical precipitation method is simple in process, easy to handle, and requires little equipment, it may cause other negative effects, such as excessive concentrations of chloride ions and calcium ions in the discharged water.

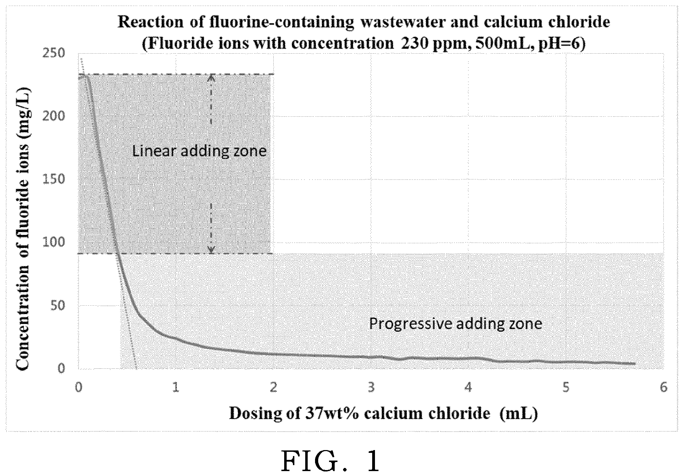

Please refer to FIG. 1, which is a comparison chart of the concentrations of fluoride ions and calcium chloride in wastewater treated by chemical precipitation. The traditional chemical precipitation method uses calcium salts such as calcium chloride or calcium hydroxide to put into industrial wastewater to react fluoride ions and calcium ions in the wastewater to form calcium fluoride. However, in the condition of only calcium salts being used to remove fluorine, the removal efficiency will significantly drop when the concentration reaches 50 ppm, which will cause problems such as excessive dosage and increased costs. Therefore, it is necessary to add excessive amounts of calcium chloride to reduce the concentration of fluoride ions in the wastewater to less than 15 ppm, in order to meet discharge water standards. It results in increased costs, consumption of a majority of an amount of calcium chloride, and environmental pollution. In addition, adding excessive calcium chloride will increase the chloride ion content and conductivity of the discharge water, and will also increase the amount of sludge produced.

In view of the foregoing, the optimization of the operating procedures of the fluoride-containing wastewater treatment system is an urgent problem that needs to be solved.

SUMMARY OF THE INVENTION

In view of the problems in the above-mentioned prior art, the present disclosure provides a two-stage fluoride-containing wastewater treatment system, which can reduce the excessive dosing of calcium chloride and the amount of sludge, stabilize the water output of the defluoridation system, and reduce fluoride ions of fluoride-containing wastewater to less than 15ppm. Therefore, the treatment of fluoride-containing wastewater has a better performance. The cost of defluoridation system is reduced. The defluoridation system facilitates the integration of water treatment equipment and the service life of the equipment is increased.

In order to achieve the above proposes, a two-stage fluoride-containing wastewater treatment system is provided and includes a first concentration defluoridation section and a second concentration defluoridation section. The two-stage fluoride-containing wastewater treatment system includes a first mixing tank, a second mixing tank, a third mixing tank, and a flocculation tank. The first mixing tank is connected to a fluoride-containing wastewater source. The first mixing tank is configured to stir and mix fluoride-containing wastewater from the fluoride-containing wastewater source and alkaline compound added therein to adjust a pH value of the fluoride-containing wastewater to be slightly acidic to slightly alkaline to form a first mixed wastewater. The second mixing tank is connected to the first mixing tank. The second mixing tank is configured to stir and mix the first mixed wastewater from the first mixing tank and calcium chloride added therein to form a second mixed wastewater. The third mixing tank is connected to the second mixing tank. The third mixing tank is configured to stir and mix the second mixed wastewater from the second mixing tank and an advanced defluoridation agent is added therein to form a third mixed wastewater. The flocculation tank is connected to the third mixing tank. The flocculation tank is configured to stir and mix the third mixed wastewater from the third mixing tank and a polymer added therein for flocculation to produce and discharge a precipitate and a defluoridation wastewater, the concentration of fluoride ions of the defluoridation wastewater is less than 15ppm.

Preferably, a concentration of fluoride ions of the second mixed wastewater is reduced to 30-85% of a concentration of fluoride ions of the first mixed wastewater.

Preferably, a concentration of fluoride ions of the third mixed wastewater is reduced to 85-99% of a concentration of fluoride ions of the first mixed wastewater.

Preferably, the alkaline compound is sodium hydroxide.

Preferably, the advanced defluoridation agent includes 40-70wt% of polyaluminum sulfate, 0.3-30wt% of hydroxyapatite, and deionized water supplemented to 100wt%.

Preferably, the advanced defluoridation agent includes 40-70wt% of polyaluminum sulfate, 5-6.5wt% of polyaluminum chloride, and 5-30% of hydroxyapatite, 1wt% of polyferric sulfate, 1wt% of nano-aluminum, 1wt% of nano-iron, 1wt% of nano-calcium, and deionized water supplemented to 100wt%.

Preferably, the polymer is polyacrylamide.

The present disclosure further provides a two-stage method for treating fluoride-containing wastewater, including the following steps:

injecting a fluoride-containing wastewater from a fluoride-containing wastewater source into a first mixing tank, and

adding an alkaline compound to the first mixing tank to adjust a pH value of the fluoride-containing wastewater to be slightly acidic to slightly alkaline, to form a first mixed wastewater;

performing a first stage of defluoridation process, including a step of: injecting the first mixed wastewater from the first mixing tank into a second mixing tank, and adding calcium chloride to form a second mixed wastewater;

performing a second stage of defluoridation process, including a step of: injecting the second mixed wastewater from the second mixing tank into a third mixing tank, and adding an advanced defluoridation agent to form a third mixed wastewater; and

injecting the third mixed wastewater from the third mixing tank into a flocculation tank, adding polymer for flocculation and sedimentation to discharge a sediment and a defluoridation wastewater, in which a concentration of fluoride ions of the defluoridation wastewater is equal to or less than 15 ppm.

Preferably, the advanced defluoridation agent includes 40-70wt% of polyaluminum sulfate, 0.3-30wt% of hydroxyapatite, and deionized water supplemented to 100 wt%.

Preferably, the advanced defluoridation agent includes 40-70wt% of polyaluminum sulfate, 5-6.5wt% of polyaluminum chloride, 5-30wt% of hydroxyapatite, and 1wt% of polyferric sulfate, 1wt% of nano-aluminum, 1wt% of nano-iron, 1wt% of nano-calcium, and deionized water supplemented to 100wt%.

The two-stage introduction of calcium chloride and the advanced defluoridation agent (also known as MU-RF501) provided by the present disclosure can not only avoid excessive addition of calcium chloride, but also reduce the chloride ion content in the discharge water and the conductivity in the water, thereby further reducing the amount of sludge produced.

The purpose, technical content, features, and effects achieved by the present disclosure will be more easily understood through detailed descriptions of specific embodiments and accompanying illustrations.

BRIEF DESCRIPTION OF THE DRAWINGS

Implementations of the present disclosure will now be described, by way of embodiment, with reference to the attached figures.

FIG. 1 is a comparison chart of the concentrations of fluoride ions and calcium chloride in wastewater treated by chemical precipitation method.

FIG. 2 is a schematic diagram of the two-stage defluoridation system of the present disclosure.

FIG. 3 is a comparison chart of the concentration of chloride ions after treatment of fluoride-containing wastewater using chemical precipitation method and the advanced defluoridation agent of the present disclosure.

FIG. 4 is a flow chart for treating fluoride-containing wastewater using the two-stage defluoridation system of the present disclosure.

DESCRIPTION OF THE PREFERRED EMBODIMENTS

Reference will now be made in detail to representative embodiments illustrated in the accompanying drawings. It should be understood that the following descriptions are not intended to limit the embodiments to one preferred embodiment. To the contrary, it is intended to cover alternatives, modifications, and equivalents, as can be included within the spirit and scope of the described embodiments, as defined by the appended claims. Thereinafter, the implementation disclosure and the related embodiment will be described to illustrate the characteristics of the present invention. However, the embodiment well known by the persons skilled in that art may not be specifically described in the specification.

The fluoride-containing wastewater used in the embodiment of the present disclosure is the industrial wastewater taken from the semiconductor factory, which is served as the fluoride-containing wastewater to be treated. A pH value of the fluoride-containing wastewater to be treated is 3-4, a concentration of fluoride ions is 100-1000ppm, a concentration of chloride ions is 5-60ppm, and a conductivity is 1-3ms/cm.

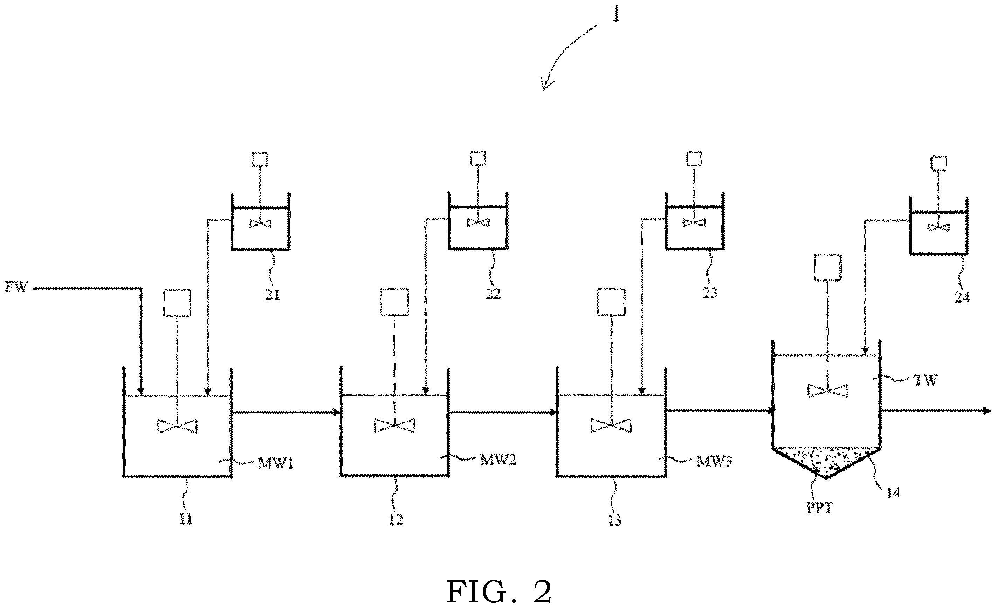

Please refer to FIG. 2, which is a schematic diagram of the two-stage fluoride-containing wastewater treatment system 1 disclosed in the present disclosure. The fluoride-containing wastewater treatment system of the present disclosure includes a first mixing tank 11, a second mixing tank 12, a third mixing tank 13, and a flocculation tank 14. Detailed description is provided below.

The first mixing tank 11 is connected to the fluoride-containing wastewater source FW with a pipeline, so that the fluoride-containing wastewater to be treated is injected into the first mixing tank 11, and the alkaline compound tank 21 is connected with a pipeline, so that the alkaline compound is injected into in the first mixing tank 11. The first mixing tank 11 is provided with a stirring component to mix the fluoride-containing wastewater and alkaline compounds to adjust the pH value of the fluoride-containing wastewater from slightly acidic to slightly alkaline to form the first mixed wastewater MW1.

Examples of alkaline compounds include but are not limited to sodium hydroxide. The amount of alkaline compound used depends on the amount required to adjust the initial pH value of the fluoride-containing wastewater to the target pH value. Those with ordinary knowledge in the field of the present disclosure can measure the pH value and adjust the amount of alkaline compound based on common techniques. The present disclosure does not intent to be limited thereto.

In the first mixing tank 11, the pH value of the fluoride-containing wastewater is adjusted to be slightly acidic to slightly alkaline, and the pH value from slightly acidic to slightly alkaline is between 6 and 8. In the present embodiment, the pH value of fluoride-containing wastewater is adjusted to 6 (slightly acidic).

The second mixing tank 12 is connected to the first mixing tank 11 with a pipeline, so that the first mixed wastewater MW1 is injected into the second mixing tank 12. The second mixing tank 12 is connected to the calcium chloride chemical tank 22 with a pipeline, so that calcium chloride is injected into the second mixing tank 12. The second mixing tank 12 is provided with a stirring component to mix the first mixed wastewater MW1 and calcium chloride, and to stir at a rotation speed of 50 rpm for 10-18 minutes to fully react to form the second mixed wastewater MW2.

The calcium chloride used in the present embodiment is commercially available calcium chloride.

A mixing ratio of the first mixed wastewater MW1 and calcium chloride is 1:300-1500, preferably 1:450. The dosage of calcium chloride can be adjusted according to the actual situation until the concentration of fluoride ions in the second mixed wastewater MW2 after the reaction drops to the target concentration or percentage.

The first mixed wastewater MW1 is stirred and mixed with calcium chloride so that the concentration of fluoride ions of the second mixed wastewater MW2 is reduced to 80-420ppm, i.e., 30-85% of the concentration of fluoride ions of the first mixed wastewater MW1 is reduced.

The third mixing tank 13 is connected to the second mixing tank 12 with a pipeline, so that the second mixed wastewater MW2 is injected into the third mixing tank 13. The third mixing tank 13 is connected to the advanced defluoridation agent tank 23 with a pipeline, so that the advanced defluoridation agent is injected into in the third mixing tank 13. The third mixing tank 13 is provided with a stirring component to mix the second mixed wastewater MW2 and the advanced defluoridation agent, and stir at a rotation speed of 50 rpm for 10-18 minutes to fully react to form the third mixed wastewater MW3.

The mixing ratio of the second mixed wastewater MW2 and the advanced defluoridation agent is 1:150-1000, preferably 1:380. The amount of advanced defluoridation agent can be adjusted according to the actual situation until the concentration of fluoride ions of the third mixed wastewater MW3 drops to the target concentration or percentage after the reaction.

The second mixed wastewater MW2 is stirred and mixed with the advanced defluoridation agent so that the concentration of fluoride ions of the third mixed wastewater MW3 is reduced to equal to or less than 15 ppm, i.e., 85-99% of the fluoride ions of the first mixed wastewater MW1 are reduced.

Please refer to Table 1, which is the composition and proportion of the advanced defluoridation agent of the present disclosure. The composition of the ingredients according to Table 1 are uniformly mixed to prepare the advanced defluoridation agent of Experimental example 1 and Comparative Examples 1-6.

Table 1

| | Experimental example 1 | Comparative example 1 | Comparative example2 | Comparative example3 | Comparative example4 | Comparative example5 | Comparative example6 |
|---|---|---|---|---|---|---|---|
| Poly aluminum sulfate | 40 wt% | 70 wt% | 40 wt% | 40 wt% | 40 wt% | 40 wt% | 40 wt% |
| Polyaluminum chloride | 6 wt% | 0 wt% | 0 wt% | 6.5 wt% | 6 wt% | 5 wt% | 5.5 wt% |
| Hydroxyapatite | 10 wt% | 0.7 wt% | 0.3 wt% | 30 wt% | 20 wt% | 15 wt% | 5 wt% |
| Polyferric sulfate | 1 wt% | 0 wt% | 0 wt% | 1 wt% | 1 wt% | 1 wt% | 1 wt% |
| Nano-aluminum | 1 wt% | 0 wt% | 0 wt% | 1 wt% | 1 wt% | 1 wt% | 1 wt% |
| Nano-iron | 1 wt% | 0 wt% | 0 wt% | 1 wt% | 1 wt% | 1 wt% | 1 wt% |
| Nano-calcium | 1 wt% | 0 wt% | 0 wt% | 1 wt% | 1 wt% | 1 wt% | 1 wt% |
| deionized water | 40.0 wt% | 29.3 wt% | 59.7 wt% | 19.5 wt% | 30.0 wt% | 36.0 wt% | 45.5 wt% |

As shown in Table 1, the advanced defluoridation agent is composed of the following weight percent concentration components: 40-70% of polyaluminum sulfate, 0.3-30% of hydroxyapatite and deionized water supplemented to 100%. Preferably, advanced defluoridation agent is composed of the following components by weight percentage: 40-70% of polyaluminum sulfate, 5-6.5% of polyaluminum chloride, 5-30% of hydroxyapatite, 1% of polyferric sulfate, 1% of calcium sulfate, 1% of nano-aluminum, 1% of nano-iron, 1% of nano-calcium, and deionized water supplemented to 100%.

The main function of polyaluminum sulfate and polyferric sulfate is to remove fluoride ions and flocculating from fluoride-containing wastewater. In addition, the matrix of polyaluminum sulfate and polyferric sulfate is sulfate ions. The solubility of polyaluminum sulfate and polyferric sulfate in water is the same as the solubility of sulfuric acid in water. The efficiency of dissolving polyaluminum sulfate and polyferric sulfate in water synergistically increases the reactivity with fluoride ions and increases the removal of fluoride ions.

The content of alumina in polyaluminum sulfate ranges from 15-20wt%, preferably 15.8wt%. The content of iron oxide in polyferric sulfate ranges from 0.2-0.8wt%, preferably 0.2wt%. The mass fraction of total iron content (calculated as $Fe^{3+}$) of polyferric sulfate is 10-20%, preferably 19 %.

The main functions of polyaluminium chloride are flocculation and removal of fluoride ions.

When the hydroxyapatite of the advanced defluoridation agent of the present disclosure reacts with the fluoride-containing wastewater, the $OH^-$ ions of the hydroxyapatite react with the fluoride ions of the fluoride-containing wastewater to achieve the ion exchange effect. At the same time, hydroxyapatite can also adsorb fluoride ions. Therefore, hydroxyapatite can remove fluoride ions in two ways: ion exchange and adsorption, which can shorten the removal reaction time and reduce the stirring time. The chemical reaction of ion exchange effect: $Ca_{10}(PO_4)_6(OH)_2 + 2F^- \rightarrow Ca_{10}(PO_4)_6F_2 + 2OH^-$. Therefore, the removal rate and removal effect of fluoride ions are increased. In addition, the $OH^-$ ions of hydroxyapatite enter the wastewater after being subject to ion exchange, which can maintain the pH value of the wastewater to pH 6-8 and reduce the amount of alkaline compounds being used.

The flocculation tank 14 is connected to the third mixing tank 13 with a pipeline, so that the third mixed solution is injected into the flocculation tank 14. The polymer tank 24 is connected with a pipeline, so that the polymer is injected into the flocculation tank 14. The flocculation tank 14 is provided with a stirring component to mix the third mixed solution and the polymer for flocculation, and stir for 10-18 minutes at a rotation speed of 30 rpm to fully react to produce and discharge a precipitate PPT and defluoridation wastewater TW. The fluoride ion of the defluoridation wastewater TW is equal to or less than 15 ppm.

The mixing ratio of the third mixed solution and the polymer is 1: 200~1250, preferably 1: 800.

Examples of polymers include but are not limited to polyacrylamide.

The mixing components of the first mixing tank 11, the first mixing tank 11, the first mixing tank 11, and the condensation tank of the present disclosure can be any component with a stirring function, such as paddle mixer, turbine mixer, anchor stirrer, ribbon stirrer, magnetic stirrer, side entry stirrer, etc.

Embodiment 1: Determination of defluoridation efficiency of a two-stage defluoridation system

The two-stage defluoridation system 1 of the present disclosure processes 500 mL of fluoride-containing wastewater FW to obtain treated defluoridation wastewater TW. In the first stage of defluoridation process, the amount of 37 wt% calcium chloride is 0.4-1.6 mL. In the second stage of defluoridation process, the mixing ratio of the advanced defluoridation agent and deionized water is 1:5-50 to prepare an advanced defluoridation agent solution with a concentration of 5%~50wt%. The above mixing/ dilution ratio can be adjusted according to needs or not diluted, and the present disclosure is not limited thereto. In this embodiment, the advanced defluoridation agent in Table 1 is prepared in deionized water to a solution with a concentration of 40wt%. An amount of 0.5 to 2.9 mL of the 40wt% advanced defluoridation agent is added to the second mixed wastewater MW2. The supernatant is extracted to detect the concentration of fluoride ions using a fluoride electrode. The fluoride ion detection method was based on the "Fluoride Salt Detection Method in Water - Fluorine Selective Electrode Method" (NIEA W413.52A). The results are shown in Table 2.

Table 2

| Reaction time | Defluoridation efficiency (%) | | | | Final concentration of fluoride ion (ppm) |
|---|---|---|---|---|---|
| | 1min | 5min | 10min | 15min | |
| Experimental example 1 | 60.1 | 89.3 | 99.5 | 99.7 | 9.5 |
| Comparative example 1 | 58.4 | 80.1 | 83.2 | 97.0 | 11.6 |
| Comparative example 2 | 57.9 | 82.5 | 85.4 | 96.5 | 13.4 |

(continued)

| Reaction time | Defluoridation efficiency (%) | | | | Final concentration of fluoride ion (ppm) |
|---|---|---|---|---|---|
| | 1min | 5min | 10min | 15min | |
| Comparative example 3 | 42.5 | 53.6 | 85.6 | 90.5 | 12.0 |
| Comparative example 4 | 40.6 | 48.9 | 84.3 | 91.3 | 10.8 |
| Comparative example 5 | 36.7 | 45.8 | 86.1 | 92.8 | 12.9 |
| Comparative example 6 | 32.8 | 40.7 | 84.4 | 90.4 | 12.7 |

As shown in Table 2, after treating the fluoride-containing wastewater using the advanced defluoridation agent in Table 1 of the present disclosure, the concentration of fluoride ions is reduced to 9.5-13.4ppm, the defluoridation efficiency is 90.4-99.7%. The defluoridation efficiency of The advanced defluoridation agent of Experimental example 1 has the best defluoridation effect, which overcomes the limit of defluoridation efficiency of the traditional chemical precipitation method, as shown in FIG. 1, and effectively achieve the effect of reducing the concentration of fluoride ions in fluoride-containing wastewater using the least reagents, thereby solving the technical problem of adding excess calcium chloride in the traditional chemical precipitation method, reducing costs, and avoiding the problem of new chemical pollution.

Accordingly, the advanced defluoridation agent of the present disclosure does meet the requirements that the low-concentration fluoride-containing wastewater discharge must be less than 15 ppm, such as "Water Discharge Standard" (Regulation No. 1080028628 released by Taiwan Food and Environmental Hygiene Department).

Embodiment 2: Determination of conductivity of defluoridation wastewater treated by two-stage defluoridation system

The supernatant of the defluoridation wastewater TW treated by the two-stage defluoridation system 1 of the present disclosure is extracted. The conductivity of the supernatant is measured using a conductivity meter. The measuring method for conductivity refers to "Measuring Method of Conductivity in Water - Conductivity Meter" (NIEA W203.51B), and is compared with the traditional chemical precipitation method (i.e., only adding calcium chloride). The conductivity of the original fluoride-containing wastewater in the present embodiment is 2.65ms/cm, and the comparison results are shown in Table 3.

Table 3

| | Traditional chemical precipitation method | Exp. example 1 | Comp. example 1 | Comp. example 2 | Comp. example 3 | Comp. example 4 | Comp. example 5 | Comp. example 6 |
|---|---|---|---|---|---|---|---|---|
| Conductivity (ms/cm) | 4.95 | 3.63 | 4.01 | 4.26 | 3.65 | 3.79 | 3.99 | 4.07 |
| Reduction ratio (%) | --- | 57.0 | 50.8 | 47.7 | 56.0 | 50.4 | 41.7 | 38.3 |

As shown in Table 3, the advanced defluoridation agent of the present disclosure reduces the conductivity of fluoride-containing wastewater to 3.63-4.07ms/cm. Compared with the traditional chemical precipitation method, the reduction ratio is 38.3-57.0%. The calculation formula is shown in Mathematical Formula 1. The advanced defluoridation agent of Experimental Example 1 has the best effect, with the smallest increase in conductivity and the highest reduction ratio.

$$\text{Reduction ratio}(\%) = \frac{\text{conductivity}_{\substack{\text{traditional chemical} \\ \text{precipitation method}}} - \text{conductivity}_{\text{Example}}}{\text{conductivity}_{\substack{\text{traditional chemical} \\ \text{precipitation method}}} - \text{conductivity}_{\substack{\text{original} \\ \text{wastewater}}}} \times 100\%$$

Mathematical formula 1

Embodiment 3: Determination of concentration of chloride ions of defluoridation wastewater treated by two-stage defluoridation system

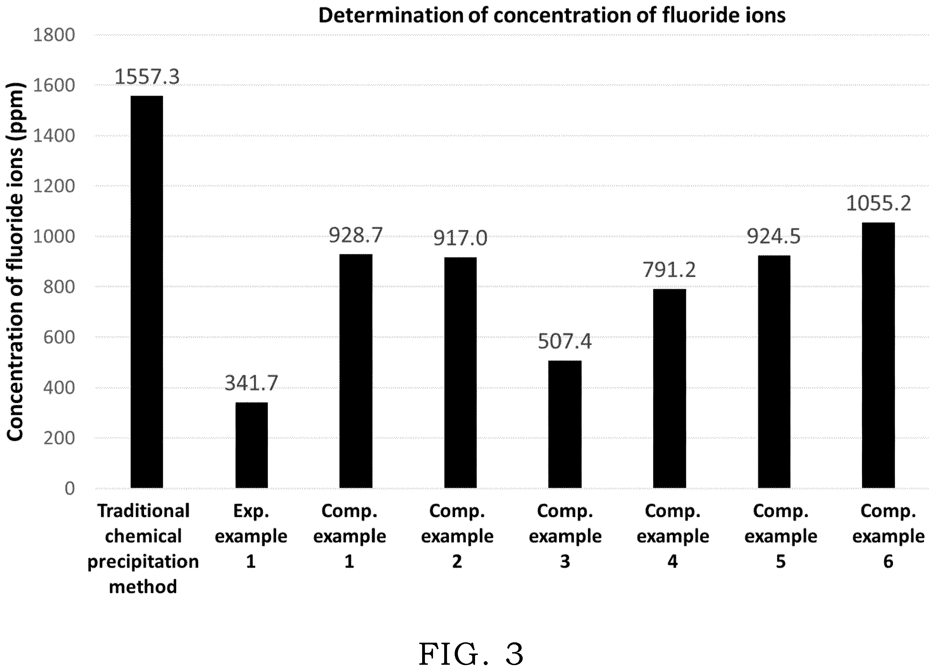

The supernatant from the defluoridation wastewater TW treated by the two-stage defluoridation system 1 of the present disclosure is extracted. The concentration of chloride ions of the supernatant is measured. The measuring method of chloride ions refers to "Measuring Method of Chloride Salt in Water" (NIEA W407.51C), and is compared with the traditional chemical precipitation method (i.e., adding only 3 grams of calcium chloride). The concentration of chloride ions of the original fluoride-containing wastewater in the present embodiment is 55.2 ppm. The results are shown in FIG. 3 and Table 4.

Table 4

| | Traditional chemical precipitation method | Experimental example 1 | Comparative example 1 | Comparative example2 | Comparative example3 | Comparative example4 | Comparative example5 | Comparative example6 |
|---|---|---|---|---|---|---|---|---|
| Concentration of the chloride ions (ppm) | 1557.3 | 341.7 | 928.7 | 917.0 | 507.4 | 791.2 | 924.5 | 1055.2 |
| Reduction ratio (%) | --- | 80.9 | 40.4 | 41.1 | 69.9 | 51.0 | 42.0 | 33.4 |

As shown in FIG. 3 and Table 4, after using chemical precipitation method to treat the fluoride-containing wastewater, the concentration of chloride ions of the fluoride-containing wastewater is as high as 1557.3 ppm. On the contrary, after using the advanced defluoridation agent of Experimental example 1 and Comparative Examples 1 to 4 of the present disclosure to treat the fluoride-containing wastewater, the concentration of chloride ions of the fluoride-containing wastewater was only 341.7-1055.2 ppm. The reduction ratio was 33.4-80.9%. The advanced defluoridation agent in Experimental example 1 has the best effect.

Accordingly, the two-stage defluoridation system of the present disclosure can effectively reduce the conductivity of fluoride-containing wastewater and reduce the chloride ion content in the wastewater while achieving a better defluoridation effect. The advanced defluoridation agents of the present disclosure do have a synergistic effect.

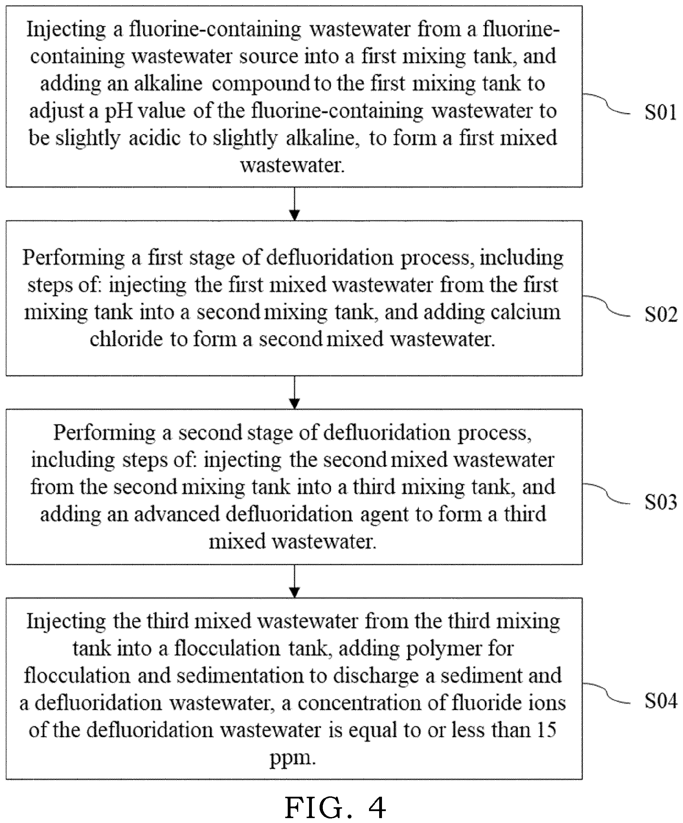

Please refer to FIG. 4, the present disclosure also provides a two-stage method for treating fluoride-containing wastewater, including the following steps:

In Step S01, injecting a fluoride-containing wastewater from a fluoride-containing wastewater source into a first mixing tank, and adding an alkaline compound to the first mixing tank to adjust a pH value of the fluoride-containing wastewater to be slightly acidic to slightly alkaline, to form a first mixed wastewater.

In Step S02, performing a first stage of defluoridation process, including steps of: injecting the first mixed wastewater from the first mixing tank into a second mixing tank, and adding calcium chloride to form a second mixed wastewater.

In Step S03, performing a second stage of defluoridation process, including steps of: injecting the second mixed wastewater from the second mixing tank into a third mixing tank, and adding an advanced defluoridation agent to form a third mixed wastewater.

In Step S04, injecting the third mixed wastewater from the third mixing tank into a flocculation tank, adding polymer for flocculation and sedimentation to discharge a sediment and a defluoridation wastewater, a concentration of fluoride ions of the defluoridation wastewater is equal to or less than 15 ppm.

Accordingly, the two-stage defluoridation system of the present disclosure includes a first stage and a second stage of defluoridation process. In the first stage of defluoridation process, calcium chloride is used to remove a majority of an amount of fluoride in fluoride-containing water. In the second stage of the defluoridation process, an advanced defluoridation agent is used for the remaining trace fluoride ions which is difficult to be removed, so that the concentration of fluoride ions of the treated fluoride-containing wastewater is equal to or less than 15 ppm. The present disclosure overcomes the Technical issues of the needs of using excessive chemical reagents in traditional technology. In addition, while achieving a better defluoridation effect, it can effectively reduce the conductivity of fluoride-containing wastewater, reduce the concentration of the chloride ions of the wastewater, and reduce the generation of sludge. Therefore, the two-stage defluoridation system of the present disclosure indeed has a synergistic effect, environmental protection and economic benefits, and greater recyclability of wastewater after defluoridation.

Listing of reference numerals:

1: Two-stage fluoride-containing wastewater treatment system;

11: First mixing tank;

12: Second mixing tank;

13: The third mixing tank;

14: Flocculation tank;

21: Alkaline compound tank;

22: Calcium chloride tank;

23: Advanced defluoridation tank;

24: Polymer tank;

FW: Fluoride wastewater source;

MW1: First mixed wastewater;

MW2: Second mixed wastewater;

MW3: Third mixed wastewater;

TW: Defluoridation wastewater;

PPT: Precipitate; and

S01-S04: steps.

## Claims

1. A two-stage fluoride-containing wastewater treatment system, comprising:

   a first mixing tank connected to a fluoride-containing wastewater source,
   wherein the first mixing tank is configured to stir and mix fluoride-containing wastewater from the fluoride-containing wastewater source and alkaline compound added therein to adjust a pH value of the fluoride-containing wastewater to be slightly acidic to slightly alkaline to form a first mixed wastewater;
   a second mixing tank connected to the first mixing tank, wherein the second mixing tank is configured to stir and mix the first mixed wastewater from the first mixing tank and calcium chloride added therein to form a second mixed wastewater;
   a third mixing tank connected to the second mixing tank, wherein the third mixing tank is configured to stir and mix the second mixed wastewater from the second mixing tank and an advanced defluoridation agent added therein to form a third mixed wastewater; and
   a flocculation tank connected to the third mixing tank, wherein the flocculation tank is configured to stir and mix the third mixed wastewater from the third mixing tank and a polymer added therein for flocculation to produce and discharge a precipitate and a defluoridation wastewater, a concentration of fluoride ions of the defluoridation wastewater is less than 15ppm.

2. The two-stage fluoride-containing wastewater treatment system of claim 1, wherein a concentration of fluoride ions of the second mixed wastewater is reduced to 30-85% of a concentration of fluoride ions of the first mixed wastewater.

3. The two-stage fluoride-containing wastewater treatment system of claim 1, wherein a concentration of fluoride ions of the third mixed wastewater is reduced to 85-99% of a concentration of fluoride ions of the first mixed wastewater.

4. The two-stage fluoride-containing wastewater treatment system of claim 1, wherein the alkaline compound is sodium hydroxide.

5. The two-stage fluoride-containing wastewater treatment system of claim 1, wherein the advanced defluoridation agent comprises 40-70wt% of polyaluminum sulfate, 0.3-30wt% of hydroxyapatite, and deionized water supplemented to 100wt%.

6. The two-stage fluoride-containing wastewater treatment system of claim 1, wherein the advanced defluoridation agent comprises 40-70wt% of polyaluminum sulfate, 5-6.5wt% of polyaluminum chloride, and 5-30% of hydroxyapatite, 1wt% of polyferric sulfate, 1wt% of nano-aluminum, 1wt% of nano-iron, 1wt% of nano-calcium, and deionized water supplemented to 100wt%.

7. The two-stage fluoride-containing wastewater treatment system of claim 1, wherein the polymer is polyacrylamide.

8. A two-stage method for treating fluoride-containing wastewater, comprising the following steps:

   injecting a fluoride-containing wastewater from a fluoride-containing wastewater source into a first mixing tank, and adding an alkaline compound to the first mixing tank to adjust a pH value of the fluoride-containing wastewater to be slightly acidic to slightly alkaline, to form a first mixed wastewater;
   performing a first stage of defluoridation process, comprising: injecting the first mixed wastewater from the first mixing tank into a second mixing tank,
and adding calcium chloride to form a second mixed wastewater;
performing a second stage of defluoridation process, comprising: injecting the second mixed wastewater from the second mixing tank into a third mixing tank, and adding an advanced defluoridation agent to form a third mixed wastewater; and
injecting the third mixed wastewater from the third mixing tank into a flocculation tank, adding polymer for flocculation and sedimentation to discharge a sediment and a defluoridation wastewater, wherein a concentration of fluoride ions of the defluoridation wastewater is equal to or less than 15 ppm.

9. The method of claim 8, wherein the advanced defluoridation agent comprises 40-70 wt% of polyaluminum sulfate, 0.3-30 wt% of hydroxyapatite, and deionized water supplemented to 100 wt%.

10. The method of claim 8, wherein the advanced defluoridation agent comprises 40-70wt% of polyaluminum sulfate, 5-6.5wt% of polyaluminum chloride, 5-30wt% of hydroxyapatite, and 1wt% of polyferric sulfate, 1wt% of nano-aluminum, 1wt% of nano-iron, 1wt% of nano-calcium, and deionized water supplemented to 100wt%.

FIG. 1

FIG. 2

FIG. 3

EP 4 534 490 A1

Injecting a fluorine-containing wastewater from a fluorine-containing wastewater source into a first mixing tank, and adding an alkaline compound to the first mixing tank to adjust a pH value of the fluorine-containing wastewater to be slightly acidic to slightly alkaline, to form a first mixed wastewater.

S01

Performing a first stage of defluoridation process, including steps of: injecting the first mixed wastewater from the first mixing tank into a second mixing tank, and adding calcium chloride to form a second mixed wastewater.

S02

Performing a second stage of defluoridation process, including steps of: injecting the second mixed wastewater from the second mixing tank into a third mixing tank, and adding an advanced defluoridation agent to form a third mixed wastewater.

S03

Injecting the third mixed wastewater from the third mixing tank into a flocculation tank, adding polymer for flocculation and sedimentation to discharge a sediment and a defluoridation wastewater, a concentration of fluoride ions of the defluoridation wastewater is equal to or less than 15 ppm.

S04

FIG. 4

Europäisches
Patentamt

European
Patent Office

Office européen
des brevets

# EUROPEAN SEARCH REPORT

**Application Number**

EP 24 20 4004

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 960 593 A (NORTHERN ENG & TECH CORP MCC) 20 November 2020 (2020-11-20) * paragraphs [0058] - [0073] * * figure 1 * | 1-10 | INV. C02F1/52 C02F1/66 |
| X | US 2006/006115 A1 (HSIEN CHEN-HUNG [TW] ET AL) 12 January 2006 (2006-01-12) * paragraphs [0019] - [0026] * * figure 3 * | 1-10 | ADD. C02F1/56 C02F101/14 C02F103/34 |
| A | CN 104 496 063 A (JILIN DESIGNING INST CNPC NORTHEAST REFINING & CHE) 8 April 2015 (2015-04-08) * the whole document * | 1-10 | |
| A | CN 113 526 639 A (BEIJING GAIA ENVIRONMENTAL TECH CO LTD ET AL.) 22 October 2021 (2021-10-22) * the whole document * | 1-10 | |

**TECHNICAL FIELDS SEARCHED (IPC)**

C02F

The present search report has been drawn up for all claims

| Place of search | Date of completion of the search | Examiner |
|---|---|---|
| The Hague | 11 November 2024 | Liebig, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

2

## ANNEX TO THE EUROPEAN SEARCH REPORT
## ON EUROPEAN PATENT APPLICATION NO.

EP 24 20 4004

This annex lists the patent family members relating to the patent documents cited in  the above-mentioned European search report.
The members are as contained in the European Patent Office EDP file on
The European Patent Office is in no way liable for these particulars which are merely given for the purpose of information.

11-11-2024

| Patent document cited in search report | | Publication date | Patent family member(s) | Publication date |
|---|---|---|---|---|
| CN 111960593 | A | 20-11-2020 | NONE | |
| US 2006006115 | A1 | 12-01-2006 | NONE | |
| CN 104496063 | A | 08-04-2015 | NONE | |
| CN 113526639 | A | 22-10-2021 | NONE | |

EPO FORM P0459

For more details about this annex : see Official Journal of the European Patent Office, No. 12/82